(19) Europäisches Patentamt
European Patent Office
Office européen des brevets

(11) Numéro de publication : **0 098 974 B1**

(12) # FASCICULE DE BREVET EUROPÉEN

(45) Date de publication du fascicule du brevet : **30.12.86**

(21) Numéro de dépôt : **83105614.8**

(22) Date de dépôt : **08.06.83**

(51) Int. Cl.4 : **B 29 D 30/52**, B 60 C 21/00, C 09 J 3/00

(54) **Matière destinée à former un joint entre deux corps, à l'extérieur de leur interface, procédés pour réaliser des ensembles avec cette matière, ensembles ainsi obtenus.**

(30) Priorité : **02.07.82 FR 8211800**

(43) Date de publication de la demande : **25.01.84 Bulletin 84/04**

(45) Mention de la délivrance du brevet : **30.12.86 Bulletin 86/52**

(84) Etats contractants désignés : **AT BE CH DE GB IT LI LU NL SE**

(56) Documents cités :
**DE-A- 2 152 871**
**DE-A- 2 423 062**
**FR-A- 2 130 355**
**FR-A- 2 152 727**
**FR-A- 2 496 004**
**GB-A- 960 021**
**US-A- 2 903 437**

(73) Titulaire : **MICHELIN & CIE (Compagnie Générale des Etablissements Michelin) Société dite:**
**4 rue du Terrail**
**F-63000 Clermont-Ferrand (FR)**

(72) Inventeur : **Tournier, Jean-Louis**
**Village Basque 43 rue Emmanuel Chabrier**
**F-63200 Riom (FR)**

(74) Mandataire : **Doussaint, Jean-Marie et al**
**MICHELIN & CIE Service K. Brevets**
**F-63040 Clermont-Ferrand Cedex (FR)**

EP 0 098 974 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

**Description**

L'invention a pour objet un procédé pour faire adhérer l'une à l'autre une face d'un corps à une face d'un autre corps, au moins un des corps étant déformable, par exemple lors de la fabrication, la réparation ou le rechapage d'enveloppes de pneumatiques pour roues de véhicules.

Une adhérence très forte est souhaitée par exemple lorsqu'on veut fixer sur la carcasse d'une enveloppe de pneumatique une bande de roulement ou des barrettes (notamment pour enveloppes destinées à des engins agricoles ou à des engins de travaux publics), ou encore lorsqu'on veut faire tenir une pièce de réparation (par exemple un emplâtre) en caoutchouc sur une partie endommagée d'une enveloppe de pneumatique.

Pour assurer une liaison aussi résistante que possible entre les deux faces à réunir, il est usuel de placer l'enveloppe de pneumatique munie de sa bande de roulement ou de ses barrettes, ou de son emplâtre de réparation, dans une enceinte chauffée contenant un fluide sous pression sec ou humide, dans laquelle les deux parties de l'assemblage sont maintenues fortement appliquées l'une contre l'autre sous l'effet de la pression du fluide, la chaleur intervenant pour réticuler les élastomères qui ne l'étaient pas déjà. Dans un but de simplification, cette utilisation simultanée de chauffage et de pression sera appelée « cuisson » dans la suite de cet exposé.

Entre les deux parties destinées à être réunies l'une à l'autre est le plus souvent interposée à une couche de liaison, sous forme par exemple d'une gomme qui peut être appliquée notamment sous forme d'un solide déformable ou d'une solution, si on le désire. Cette couche de liaison forme donc un corps disposé entre deux corps extrêmes constitués par les deux parties à réunir.

La mise en œuvre de ce procédé impose d'une part que l'air inévitablement présent entre les faces à assembler en soit retiré pratiquement en totalité avant cuisson, afin qu'aucune poche d'air, si petite soit-elle, ne compromette la bonne tenue de l'assemblage lors de l'utilisation de celui-ci après cuisson. D'autre part il faut absolument empêcher toute infiltration de fluide sous pression entre les faces de l'assemblage.

Les moyens mis en œuvre pour d'une part évacuer l'air avant cuisson, d'autre part prévenir toute infiltration au cours de cette cuisson, sont d'autant plus complexes, encombrants, difficiles à manipuler et coûteux que la dimension des enveloppes de pneumatiques est grande. Lorsqu'il s'agit d'une enveloppe de pneumatique à rechaper, ces moyens comprennent le plus souvent une membrane ou gaine souple et étanche dans laquelle on place l'enveloppe et qui, éventuellement, est reliée à une source de vide. Une telle membrane est décrite par exemple dans la DE-B-1 094 976. La mise en place de l'enveloppe dans cette membrane est effectuée manuellement et requiert un effort physique parfois considérable. En outre des anneaux doivent être utilisés pour assurer l'étanchéité entre le pourtour de la membrane et l'enveloppe. Ces anneaux, généralement en métal, sont souvent la source d'avaries à la membrane, laquelle doit alors être mise au rebut, après n'avoir servi que pour un nombre limité d'opérations, ce qui augmente les coûts d'exploitation.

Il a déjà été proposé dans le brevet FR-A-2 030 005 de placer l'enveloppe de pneumatique dans l'enceinte de cuisson sans l'avoir préalablement introduite dans une membrane souple et étanche. L'une des variantes du procédé décrit dans ce brevet comporte les quatre étapes suivantes :

1) la bande de roulement neuve est appliquée sur la carcasse avec interposition d'une couche de gomme de liaison ;

2) l'air inclus entre la carcasse, la couche de gomme de liaison et la bande de roulement est chassé par rouletage ;

3) une matière résistant à la chaleur est appliquée par exemple par projection ou au pinceau sur les faces latérales de la bande de roulement et la carcasse pour éviter tout déplacement relatif entre la carcasse et la bande de roulement ;

4) enfin, l'ensemble est introduit dans une enceinte de cuisson.

Le brevet d'invention dans lequel est décrit ce procédé connu ne donne sur la matière résistant à la chaleur aucune indication tant soit peu précise.

La demanderesse a alors effectué des essais ayant pour but de rechercher une matière qui permette d'opérer de façon effective sans membrane ou gaine d'aucune sorte, cette matière étant appliquée sur l'extérieur de l'interface, ou des interfaces, des corps, tout en assurant une liaison pratiquement parfaite, en particulier dépourvue de toute inclusion d'air, entre les corps.

Les essais effectués avec divers élastomères habituellement utilisés en caoutchouterie, n'ont permis d'assurer une liaison parfaite entre la bande de roulement et la carcasse que si la totalité de l'air avait été chassée d'entre ces deux parties par un rouletage très minutieux effectué avant application de l'élastomère. Or si un tel rouletage est concevable dans des conditions de travail idéales il arrive qu'en pratique, notamment pour des enveloppes de pneumatiques de très grande dimension, l'opérateur chargé de ce travail ne l'exécute pas avec tout le soin nécessaire. La possibilité d'inclusion d'air est donc à craindre, et l'enveloppe de pneumatique cuite qui contient une telle inclusion risque de devenir inutilisable après seulement quelques heures de service.

Au cours de la poursuite de ces essais, la demanderesse a constaté que la famille des élastomères silicones permettait d'effectuer des assemblages donnant entière satisfaction en ce qui concerne l'élimination de bulles d'air, comme décrit dans son brevet français FR-A-2 496 004.

Ces élastomères silicones ont cependant l'inconvénient de ne pas être compatibles avec les élastomères couramment utilisés dans l'industrie, par exemple pour la réalisation d'enveloppes de pneumatiques, et cela d'autant plus que ce sont des agents anti-collants notoires. Des risques de contamination et de décollage sont donc à craindre lors de l'emploi de ces élastomères silicones, de telle sorte qu'il est le plus souvent nécessaire d'enlever ces élastomères silicones, par exemple par brossage, avant l'utilisation des assemblages cuits, ce qui augmente les coûts et cela d'autant plus que les produits silicones sont d'un prix élevé.

La demanderesse a donc poursuivi des essais avec des élastomères non siliconés compatibles avec les produits habituellement utilisés en caoutchouterie et elle a eu la surprise de constater qu'il était possible d'utiliser avec succès une matière à base de tels élastomères non siliconés à condition de prévoir une formulation spéciale.

La matière conforme à l'invention est caractérisée par les points suivants :

a) elle est constituée d'un mélange fluide dont la viscosité mesurée à température normale est au moins égale à 0,3 Pa · s et au plus égale à 700 Pa · s ;

b) l'extrait sec du mélange, mesuré à température et pression normales, est au moins égal à 20 % en poids et au plus égal à 80 % en poids, par rapport au poids du mélange fluide initial ;

c) l'extrait sec du mélange comporte une fraction élastomère dont au moins 20 % en poids est constitué d'au moins un élastomère insaturé susceptible de réticuler soit à température ambiante, soit à chaud pendant un temps inférieur à une minute.

L'invention concerne donc un procédé pour réaliser un ensemble comportant au moins deux corps, dont au moins un est déformable, consistant à disposer une face d'un des corps contre une face de l'autre corps, puis à appliquer une matière destinée à former un joint entre les deux corps sur tout ou partie de l'extérieur de leur interface ainsi obtenue, l'ensemble ainsi réalisé étant destiné à être cuit ensuite, après formation du joint, dans une enceinte chauffée contenant un fluide sous pression de telle sorte que, lors de cette cuisson, l'ensemble soit directement au contact du fluide et les corps adhèrent l'un à l'autre, caractérisé par les points suivants :

a) les faces sont disposées l'une contre l'autre de telle sorte qu'il existe des contacts imparfaits entre elles susceptibles de favoriser les cheminements gazeux vers l'extérieur de l'ensemble ;

b) la matière est constituée d'un mélange fluide dont la viscosité mesurée à température normale est au moins égale à 0,3 Pa · s et au plus égale à 700 Pa · s ;

c) l'extrait sec du mélange, mesuré à température et pression normales, est au moins égal à 20 % en poids et au plus égal à 80 % en poids, par rapport au poids du mélange fluide initial ;

d) l'extrait sec du mélange comporte une fraction élastomère dont au moins 20 % en poids est constitué d'au moins un élastomère insaturé susceptible de réticuler soit à température ambiante, soit à chaud pendant un temps inférieur à une minute ;

e) la quantité de matière appliquée est choisie de telle sorte que le joint obtenu après réticulation de l'élastomère insaturé ou des élastomères insaturés ait une épaisseur au moins égale à 0,1 mm et au plus égale à 1 mm dans sa portion recouvrant l'interface ;

f) on cuit l'ensemble, après formation du joint par réticulation, dans une enceinte chauffée contenant un fluide sous pression, l'ensemble étant directement au contact du fluide, de sorte que l'air inclus entre les faces des corps diffuse de l'intérieur de l'ensemble vers l'extérieur de cet ensemble en migrant à travers le joint et que les corps adhèrent l'un à l'autre.

Les figures toutes schématiques du dessin avec leur description ainsi que les exemples qui suivent sont destinés à illustrer l'invention et à en faciliter la compréhension sans toutefois en limiter la portée.

Sur le dessin :

la figure 1 représente en coupe, avant cuisson, un ensemble pouvant être réalisé conformément à l'invention ;

la figure 2 représente en coupe un ensemble cuit réalisé conformément à l'invention ;

la figure 3 représente en coupe un ensemble cuit défectueux, cet ensemble n'étant pas réalisé conformément à l'invention ;

la figure 4 représente en coupe radiale le sommet d'une enveloppe de pneumatique réalisée conformément à l'invention ;

la figure 5 représente en coupe un autre ensemble réalisé conformément à l'invention, cet ensemble correspondant à la réparation d'une blessure dans un article en caoutchouc.

On voit à la figure 1 un ensemble 1 qui constitue une éprouvette destinée à montrer la mise en œuvre des procédés conformes à l'invention.

L'éprouvette 1 comporte deux corps 2, 3 que l'on veut faire adhérer l'un à l'autre, au moins un de ces corps étant déformable. A titre d'exemple, le corps 2 est une plaque de caoutchouc réticulé ayant 2 cm d'épaisseur, les faces principales 2A, 2B de cette plaque ayant chacune la forme d'un carré de 10 cm de côté. Le corps 3 est une plaque de caoutchouc non encore réticulé et réticulable. Cette plaque a une épaisseur d'environ 5 mm, et elle se déforme facilement étant donné la malléabilité de la gomme crue, c'est-à-dire non réticulée.

De préférence chacun des corps 2, 3 est réalisé avec au moins un élastomère insaturé homopolymère ou copolymère, comme par exemple un caoutchouc naturel, un polyisoprène, un polybutadiène, un polychloroprène, un copolymère styrène-butadiène, un copolymère isobutylène-isoprène, éventuellement halogéné, un terpolymère à base d'éthylène et de propylène (EPT), un mélange de ces élastomères entre eux et/ou avec une ou plusieurs autres matières qui peuvent être notamment des élastomères saturés comme par exemple un polyisobutylène ou un copolymère éthylène-propylène (EPR). Ces corps 2, 3 comportent d'autre part des ingrédients couramment utilisés dans l'industrie des caoutchoucs, comme par exemple des agents de réticulation, notamment le soufre, des accélérateurs de réticulation, des charges. Les formulations connues permettant d'obtenir les corps 2, 3 peuvent donc être très variées et elles ne sont pas détaillées dans cet exemple pour simplifier l'exposé.

L'éprouvette 1 est réalisée de la façon suivante. La face 2A du corps 2 est rendue rugueuse par exemple par brossage. On dispose ensuite sur cette face 2A deux barrettes 4 en caoutchouc non réticulé dont la définition correspond par exemple à celle donnée précédemment pour les corps 2, 3. Ces barrettes 4 ont une longueur d'environ 8 cm et une section carrée, leur épaisseur étant d'environ 1 cm.

Ces barrettes 4 sont disposées de telle sorte qu'elles soient parallèles entre elles et à deux côtés de la face 2A, ces barrettes étant environ à 3 cm l'une de l'autre.

On dispose ensuite le corps 3 de telle sorte que sa face principale 3A se trouve au contact de la face supérieure 4A de chaque barrette 4 et au contact de la face 2A du corps 2, l'autre face principale, dirigée vers l'extérieur, du corps 3, étant référencée 3B, la face latérale de ce corps 3 étant référencée 3C.

Les faces 2A, 3A sont au contact l'une de l'autre en définissant ainsi une interface 5 qui entoure les barrettes 4. Ces barrettes sont ainsi entourées par les corps 2, 3. Grâce à la rugosité de la face 2A, il existe des contacts imparfaits entre les faces 2A, 3A, à l'interface 5. Par suite de la présence des barrettes, une quantité notable d'air se trouve enfermée entre les corps 2, 3, d'une part dans le volume 6, au centre, entre les barrettes 4, d'autre part dans le volume 7, à la périphérie, entre l'interface 5 et les barrettes 4.

On applique ensuite une matière 8, destinée à former un joint entre les deux corps 2, 3, sur l'extérieur de l'interface 5, cette matière 8 recouvrant ainsi les faces 2A, 3B, 3C des corps 2, 3 sur toute la périphérie de l'ensemble 1, c'est-à-dire qu'elle est disposée à cheval sur les corps 2, 3. La matière 8 peut être appliquée de diverses façons, par exemple avec un pinceau, un pistolet, une spatule, une raclette, ou par trempage. L'application peut se faire en une ou plusieurs couches si on le désire.

Conformément à l'invention, la matière 8 a les caractéristiques qui suivent.

a) Elle est constituée d'un mélange fluide dont la viscosité mesurée par méthode Brookfield à température normale (20 °C) est au moins égale à 0,3 Pa · s (300 cP), et au plus égale à 700 Pa · s (7 000 P). Cette viscosité est de préférence au moins égale à 10 Pa · s (100 P) et au plus égale à 50 Pa · s (500 P).

b) L'extrait sec du mélange mesuré à température et pression normales (20 °C, 1 bar) est au moins égal à 20 % en poids et au plus égal à 80 % en poids. Cet extrait sec est de préférence au moins égal à 30 % en poids et au plus égal à 70 % en poids. Ces pourcentages en poids sont calculés par rapport au poids du mélange fluide initial, l'extrait sec étant obtenu par évaporation du ou des fluides volatils de ce mélange initial à température et pression normales.

c) L'extrait sec du mélange comporte une fraction élastomère constituée d'un ou plusieurs élastomères et au moins 20 % en poids de cette fraction élastomère est constitué d'au moins un élastomère insaturé susceptible de réticuler soit à température ambiante, soit à chaud pendant un temps inférieur à une minute. Cet élastomère insaturé peut être homopolymère ou copolymère, comme par exemple un caoutchouc naturel, un polyisoprène, un polybutadiène, un polychloroprène, un copolymère styrène-butadiène, un copolymère isobutylène-isoprène, éventuellement halogéné, un terpolymère à base d'éthylène et de propylène (EPT). La fraction élastomère peut comporter d'autre part plusieurs élastomères insaturés, par exemple plusieurs des élastomères précédemment cités. La fraction élastomère peut aussi comporter un ou plusieurs élastomères saturés, comme par exemple un polyisobutylène, un copolymère éthylène-propylène (EPR). De préférence la fraction élastomère comporte au moins 60 % en poids d'élastomère(s) insaturé(s) et avantageusement au moins 80 % en poids d'élastomère(s) insaturé(s).

De préférence la fraction élastomère représente au moins 40 % en poids de l'extrait sec et avantageusement au moins 60 % en poids de l'extrait sec.

Le poids moléculaire arithmétique $P_{ma}$ de cette fraction élastomère est de préférence au moins égal à 6 000 et au plus égal à 600 000.

Le poids moléculaire arithmétique $P_{ma}$ est défini :

soit par le poids moléculaire moyen de l'élastomère insaturé si la fraction élastomère est entièrement constituée de cet élastomère insaturé ;

soit par la relation $P_{ma} = \Sigma p_e P_{me}$ dans laquelle $p_e$ représente le pourcentage en poids de chaque élastomère (insaturé ou saturé) dans la fraction élastomère, si celle-ci est constituée d'un mélange d'élastomère, et $P_{me}$ représente le poids moléculaire moyen de cet élastomère. $P_{ma}$ est donc défini dans ce cas par la somme de tous les produits $p_e P_{me}$, avec bien sûr $\Sigma p_e = 1$.

Le poids moléculaire moyen $P_{me}$ du ou de chaque élastomère représente un poids moléculaire moyen en nombre et il est déterminé par osmométrie sur une solution de l'élastomère considéré dans le toluène à 35 °C.

La partie liquide de la matière peut être constituée par exemple d'un ou plusieurs solvants connus en soi et compatibles avec la fraction élastomère, comme par exemple un ou plusieurs solvants hydrocarbonés. Cette partie liquide peut aussi être constituée en partie par un ou plusieurs élastomères qui restent alors dans l'extrait sec.

La réticulation du ou des élastomères insaturés à température ambiante ou à chaud pendant un temps inférieur à une minute peut être réalisée par exemple en utilisant des radiations ou des systèmes de réticulation adaptés comprenant des agents de réticulation et éventuellement des accélérateurs de réticulation.

Comme agent de réticulation on peut utiliser par exemple le soufre.

Dans ce cas la proportion de soufre est de préférence au moins égale à 3 p.c.e. et au plus égale à 9 p.c.e., l'abréviation « p.c.e » voulant dire « partie(s) en poids pour 100 parties en poids de la fraction élastomère ».

On peut aussi employer par exemple comme agent de réticulation une ou plusieurs quinones, notamment la parabenzoquinonedioxime ou la dibenzoyl-paraquinone-dioxime. Dans ce cas, la proportion de la quinone ou de l'ensemble des quinones est de préférence au moins égale à 5 p.c.e. et au plus égale à 30 p.c.e.

Comme accélérateurs de réticulation particulièrement adaptés au soufre on peut utiliser par exemple :

— un ou plusieurs xanthates notamment l'isopropylxanthate de sodium, l'éthylxanthate de zinc, le butylxanthate de zinc, le disulfure de dibutylxanthogène, le xanthate préféré étant l'isopropylxanthate de zinc ; la proportion du xanthate ou de l'ensemble des xanthates est de préférence au moins égale à 1 p.c.e. et au plus égale à 4 p.c.e. ;

— une ou plusieurs amines notamment la dibutylamine, la cyclohexylethylamine, la dibenzylamine, l'amine préférée étant la dibutylamine ; la proportion de l'amine ou de l'ensemble des amines est de préférence au moins égale à 0,2 p.c.e. et au plus égale à 1 p.c.e. ;

— un ou plusieurs carbamates, notamment le diethyldithiocarbamate de sodium, le dibutyldithiocarbamate de sodium, le dibutyldithiocarbamate de zinc, le dibenzyldithiocarbamate de zinc, le dibutyldithiocarbamate de n,n-dimethylcyclohexylammonium, le carbamate préféré étant le dibutyldithiocarbamate de zinc ; la proportion du carbamate ou de l'ensemble des carbamates est de préférence au moins égale à 2 p.c.e. et au plus égale à 4 p.c.e. ;

De préférence, lorsque les accélérateurs précités sont utilisés conjointement avec le soufre, on utilise dans la matière au moins deux de ces accélérateurs correspondant à des familles différentes, par exemple un mélange d'isopropylxanthate de zinc, de dibutylamine et dibutyldithiocarbamate de zinc, dans les proportions précédemment définies. On obtient ainsi un effet synergétique qui favorise la rapidité de la réticulation.

Comme autres accélérateurs de réticulation on peut employer un ou plusieurs oxydes métalliques, soit avec le soufre, soit avec d'autres agents de réticulation, par exemple les quinones. De tels oxydes sont par exemple les oxydes de zinc ($ZnO$), de plomb ($PbO_2$), de magnésium ($MgO$), la proportion de l'oxyde ou de l'ensemble des oxydes étant de préférence au moins égale à 2 p.c.e. et au plus égale à 10 p.c.e.

La matière peut comporter en outre des adjuvants et charges divers couramment employés dans l'industrie du caoutchouc, comme par exemple l'acide stéarique, de préférence dans une proportion au moins égale à 0,5 p.c.e. et au plus égale à 3 p.c.e., la silice, de préférence dans une proportion au moins égale à 10 p.c.e. et au plus égale à 50 p.c.e., du noir de carbone, de préférence dans une proportion au moins égale à 10 p.c.e. et au plus égale à 50 p.c.e. des résines organiques naturelles ou synthétiques, notamment des résines phénoliques, de préférence dans une proportion au moins égale à 5 p.c.e. et au plus égale à 15 p.c.e.

Toutes les proportions données précédemment en ce qui concerne la fraction élastomère, les agents de réticulation, les accélérateurs de réticulation, les adjuvants et charges divers correspondent à l'extrait sec de la matière.

A titre d'exemple la matière 8 a été réalisée successivement avec l'une des formulations $F_1$, $F_2$, $F_3$, $F_4$, $F_5$, $F_6$, $F_7$, $F_8$, $F_9$ dont la composition et les propriétés sont données dans le tableau 1 suivant.

(Voir Tableau I pages 6 et 7)

Remarques sur le tableau 1

1. Nature et constitution de la fraction élastomère

— les abréviations utilisées sont les suivantes : NR : caoutchouc naturel ; PB : polybutadiène ; PI : polyisoprène ; PC1R : polychloroprène ; SBR : copolymère styrène-butadiène ; C1 IIR : copolymère chloré isobutylène-isoprène ; IR : polyisobutylène ;

Tableau I

| Formulation | | $F_1$ | $F_2$ | $F_3$ | $F_4$ | $F_5$ |
|---|---|---|---|---|---|---|
| Nature de la fraction élastomère | | NR | PB | PI | P Cl R | SBR |
| Poids moléculaire moyen de chaque élastomère | | 600 000 | 150 000 | 6 000 | 100 000 | 120 000 |
| Poids moléculaire arithmétique $P_{ma}$ | | 600 000 | 150 000 | 6 000 | 100 000 | 120 000 |
| composition de l'extrait sec (parties en poids) | fraction élastomère | 100 | 100 | 100 | 100 | 100 |
| | oxyde de zinc (Zn O) | 3 | 3 | 3 | 3 | 3 |
| | acide stéarique | 1 | 1 | 1 | 1 | 1 |
| | isopropylxanthate de zinc | 2 | 2 | 2 | 2 | 2 |
| | dibutylamine | 0,8 | 0,8 | 0,8 | 0,8 | 0,8 |
| | dibutyldithiocarbamate de zinc | 3,2 | 3,2 | 3,2 | 3,2 | 3,2 |
| | soufre | 4 | 4 | 3 | 4 | 3 |
| | noir HAF (N 330) | | | 20 | | |
| | silice | | | | 40 | |
| Nature du solvant | | 100/160 | 100/160 | 90/120 | méthylisobutylcétone | 100/160 |
| % d'extrait sec | | 30 % | 30 % | 70 % | 40 % | 30 % |
| Viscosité (Pa.s) mesurée au viscosimètre Brookfield | | 40 | 25 | 30 | 20 | 25 |
| Perméabilité du joint obtenu après réticulation ($m^3.m/s.m^2.Pa$) (Norme ISO 2782) | | $1,6.10^{-16}$ | $9,6.10^{-17}$ | $3,2.10^{-17}$ | $1,9.10^{-17}$ | $9.10^{-17}$ |

Tableau I (Suite)

| Formulation | | $F_6$ | $F_7$ | $F_8$ | $F_9$ |
|---|---|---|---|---|---|
| Nature de la fraction élastomère | | PI + NR | SBR + PI | PI + Cl IIR | PI + IR |
| Poids moléculaire moyen de chaque élastomère | | PI = 6 000<br>NR = 600 000 | SBR = 120 000<br>PI = 6 000 | PI = 600 000<br>ClIIR = 350 000 | PI = 600 000<br>IR = 450 000 |
| Poids moléculaire arithmétique $P_{ma}$ | | 62 430 | 16 830 | 575 000 | 585 000 |
| Composition de l'extrait sec (parties en poids) | fraction élastomère | 100 | 100 | 100 | 100 |
| | oxyde de zinc (Zn O) | 2,85 | 3 | 3 | 3 |
| | acide stéarique | 0,95 | 1 | 1 | 1 |
| | isopropylxanthate de zinc | 1,9 | 2 | 2 | 2 |
| | dibutylamine | 0,8 | 0,8 | 0,8 | 0,8 |
| | dibutyldithiocarbamate de zinc | 3,2 | 3,2 | 3,2 | 3,2 |
| | soufre | 3,8 | 4 | 4 | 4 |
| | noir HAF (N 330) | | | 10 | 10 |
| | silice | | | | |
| Nature du solvant | | 100/130 | 100/160 | 100/160 | 100/160 |
| % d'extrait sec | | 60 % | 60 % | 30 % | 30 % |
| Viscosité (Pa.s) mesurée au viscosimètre Brookfield | | 33 | 30 | 35 | 35 |
| Perméabilité du joint obtenu après réticulation ($m^3.m/s.m^2.Pa$) (Norme ISO 2782) | | $7,7.10^{-17}$ | $6,4.10^{-17}$ | $2.10^{-16}$ | $2.10^{-16}$ |

— les compositions $F_1$, $F_2$, $F_3$, $F_4$, $F_5$ comportent chacune une fraction élastomère constituée d'un seul élastomère qui est insaturé ;

— les compositions $F_6$, $F_7$, $F_8$ comportent chacune une fraction élastomère constituée de deux élastomères qui sont insaturés. La constitution de ces fractions élastomères est la suivante (parties en poids) :

pour $F_6$ : 90,5 parties de polyisoprène et 9,5 parties de caoutchouc naturel ;
pour $F_7$ : 9,5 parties de copolymère styrène-butadiène et 90,5 parties de polyisoprène ;
pour $F_8$ : 90 parties de polyisoprène et 10 parties de copolymère chloré isobutylène-isoprène ;

— la composition $F_9$ comporte une fraction élastomère constituée d'un élastomère insaturé et d'un élastomère saturé, la constitution de cette fraction élastomère étant la suivante (parties en poids) : 90 parties de polyisoprène et 10 parties de polyisobutylène.

2. Nature du solvant

— Les abréviations 100/160, 90/120, 100/130 correspondent à des fractions de distillation de pétrole, sous une pression de 1 bar entre les températures de :

100 °C à 160 °C pour le solvant 100/160
90 °C à 120 °C pour le solvant 90/120
100 °C à 130 °C pour le solvant 100/130

Après avoir appliqué la matière 8 on laisse l'éprouvette à température ambinate (environ 20 °C) pendant un temps suffisant pour provoquer l'évaporation du solvant et la réticulation du ou des élastomères insaturés de cette manière. Ce temps peut varier de 24 heures à 72 heures suivant les formulations $F_1$ à $F_9$.

Après réticulation, l'épaisseur totale de la pellicule élastique 9 ainsi obtenue en une ou plusieurs couches et faisant joint entre les corps 2, 3 est au moins égale à 0,1 mm et au plus égale à 1 mm dans sa portion 90 qui recouvre l'interface 5, le reste du joint 9 pouvant avoir une épaisseur quelconque. Ce joint 9 s'étend par exemple sur une largeur de 1 à 10 mm de part et d'autre de l'interface 5.

On dispose ensuite l'éprouvette dans une enceinte où l'on introduit un fluide chauffé sous pression, l'ensemble étant directement au contact du fluide. On réalise ainsi dans cette enceinte la cuisson et donc, lors de cette cuisson, la réticulation des élastomères insaturés contenus dans le corps 3 et les barrettes 4 ainsi que le collage entre les corps 2, 3, par suite de cette réticulation. Pour chaque ensemble obtenu avec l'une des formulations $F_1$ à $F_9$, la cuisson dans l'enceinte est réalisée de deux façons différentes :

— utilisation d'un mélange d'air et de vapeur d'eau à 140 °C, sous une pression de 5,5 bars ; cuisson effectuée pendant 3 heures ;

— utilisation d'air sec à 125 °C sous une pression de 5,5 bars ; cuisson effectuée pendant 2 heures 30 minutes.

Il va de soi que lors de la cuisson le chauffage pourrait être obtenu par d'autres moyens que le fluide sous pression par exemple par rayonnement.

Après cuisson, on sort l'éprouvette de l'enceinte et on la sectionne pour examiner visuellement l'état de l'adhérence entre les corps 2, 3. Une telle coupe est représentée à la figure 2.

On fait dans tous les cas les constations suivantes :

— l'adhérence entre les corps 2, 3 est parfaite ;

— les corps 2, 3 adhèrent étroitement entre eux et avec les barrettes 4 qui ont une forme écrasée, c'est-à-dire qu'il ne subsiste plus d'air entre les corps 2, 3 et qu'il n'y a pas eu de migration du fluide sous pression, en provenance de l'enceinte vers l'intérieur de l'éprouvette 1.

Selon la demanderesse, l'explication de ce phénomène est la suivante :

les valeurs précédemment citées pour la matière 8 concernant la viscosité et l'extrait sec permettent d'étendre cette matière de façon très régulière sur les faces 2A, 3B, 3C et sur l'extérieur de l'interface 5, en obtenant un bon contact entre cette matière 8 et les corps 2, 3.

Après réticulation à température ambiante du ou des élastomères insaturés de la matière 8 on obtient une membrane 9 fine, élastique et résistante qui forme un joint. Etant donné que cette réticulation est obtenue à température ambiante, il n'y a pas pendant cette réticulation dilatation de l'air inclus dans l'éprouvette 1, et par suite il ne se produit aucun décollage de la membrane par rapport aux corps 2, 3, ou aucune rupture de cette membrane pendant cette réticulation.

Lorsque l'éprouvette 1 est mise en contact dans l'enceinte avec le fluide chaud sous pression, il se produit tout d'abord une compression de l'air contenu à l'intérieur de cette éprouvette grâce à un écrasement des corps 2, 3 déformables et des barretttes 4 également déformables et ceci sans que le fluide de compression puisse pénétrer à l'intérieur de l'éprouvette 1 car la membrane 9 formant joint s'oppose à toute pénétration du fluide gazeux de l'enceinte vers l'intérieur de l'éprouvette pendant cette phase de compression qui est très rapide (de l'ordre d'une seconde).

Au moment de son inclusion dans l'éprouvette, l'air avait une pression d'environ 1 bar. Cette pression s'élève pendant cette phase de compression pour devenir pratiquement égale à la pression du gaz comprimé dans l'enceinte.

Par suite du contact de l'éprouvette 1 avec le fluide gazeux chaud, il se produit ensuite une élévation de la température à l'intérieur de l'éprouvette 1. La pression de l'air s'élève donc encore à l'intérieur de cette éprouvette et devient supérieure à la pression du fluide gazeux dans l'enceinte, à l'extérieur de l'éprouvette. L'air diffuse donc en permanence pendant cet échauffement de l'intérieur de l'éprouvette 1 vers l'extérieur de cette éprouvette, c'est-à-dire vers le fluide gazeux chaud.

Cette migration s'effectue à travers la membrane 9 qui joue le rôle de membrane perméable pendant tout le temps que dure cette phase d'échauffement de l'éprouvette. Ce temps est d'autant plus long que l'ensemble à cuire est plus volumineux, il est par exemple de l'ordre de 5 minutes dans l'exemple décrit. La migration d'air se poursuit pendant tout ce temps de telle sorte qu'il ne reste ensuite plus d'air à l'intérieur de l'éprouvette. La réticulation du corps 3 et des barrettes 4 pendant la cuisson est relativement lente, et elle s'effectue après l'évacuation de l'air hors de l'éprouvette.

Le drainage de l'air vers la membrane 9, à l'intérieur de l'éprouvette est rendu possible par la présence de contacts imparfaits entre les faces 2A, 3A grâce au brossage de la face 2A.

Ces contacts imparfaits pourraient êre obtenus de toute autre façon, par exemple en utilisant des moyens de drainage comme par exemple des fils, des fibres, des câbles, des matières tissées ou non tissées.

Grâce à l'invention, la membrane 9 joue les rôles complexes et apparemment contradictoires précédemment décrits. Ceci pour les raisons suivantes : les valeurs précédemment indiquées pour la matière 8 en ce qui concerne notamment la viscosité et l'extrait sec permettent d'obtenir une membrane 9 qui, dans l'enceinte, soit à la fois résistante mécaniquement, imperméable pendant la phase de compression de l'éprouvette sous l'effet du fluide gazeux de l'enceinte, et perméable pendant la phase ultérieure d'échauffement de l'éprouvette 1, et ceci pour une épaisseur faible de la membrane 9 dans sa portion recouvrant l'interface 5 car pour une épaisseur supérieure à 1 mm dans cette portion la membrane 9 n'est plus assez perméable pour permettre l'évacuation de l'air inclus initialement dans l'éprouvette 1.

Conformément à l'invention, la nature de la matière utilisée pour réaliser le joint, et l'épaisseur du joint dans sa portion recouvrant l'interface, réalisent un compromis tel que d'une part, lors de la phase de compression, la vitesse de diffusion soit trop faible pour que le fluide de l'enceinte puisse pénétrer à l'intérieur de l'éprouvette, et que d'autre part, lors de la phase d'échauffement, la vitesse de diffusion soit suffisante pour permettre l'évacuation de l'air, hors de l'éprouvette, avant réticulation du corps 3.

L'invention permet d'obtenir les avantages suivants :

1) Il n'est plus nécessaire d'éliminer l'air entre les faces assemblées avant cuisson, ou bien cette opération peut être effectuée rapidement, sans soin particulier, d'où un gain de temps sensible, et surtout la certitude de toujours obtenir une adhérence parfaite des faces en contact après cuisson.

2) Il est possible de choisir le ou les élastomères de la matière de telle sorte qu'ils soient compatibles avec les corps à réunir. Dans ces conditions il n'est pas nécessaire d'éliminer le joint après cuisson, ce joint pouvant ainsi rester fixé sur l'ensemble cuit pendant son utilisation, étant donné qu'alors il n'y a plus de risque de contamination et de décollage.

L'explication de ce fait est la suivante, le joint pénètre souvent entre les faces assemblées, notamment lors de la mise sous pression dans l'enceinte. Lorsque les élastomères du joint sont incompatibles avec les corps avec lesquels il est en contact, par suite de cette pénétration, il peut y avoir contamination de ces corps à leur interface par les élastomères du joint, cette contamination conduisant ultérieurement à des décollages par suite des sollicitations dynamiques, de telle sorte qu'il est le plus souvent nécessaire d'enlever le joint et d'usiner les surfaces contaminées des corps avant l'utilisation de l'ensemble cuit, par exemple par meulage, brossage, tranchage, sablage. Le fait de laisser le joint sur l'ensemble cuit permet de simplifier le procédé de réalisation de l'ensemble et permet aussi de réduire les coûts. Pour cette raison, lors de la fabrication, la réparation ou le rechapage d'enveloppes de pneumatiques, il est avantageux pour réaliser le joint de ne pas utiliser des élastomères insaturés de type butyle (c'est-à-dire les copolymères isobutylène-isoprène halogénés ou non), ou de type EPT, ou des élastomères saturés (notamment le polyisobutylène, les élastomères de type EPR), car ces élastomères, de même que les silicones, ne sont pas en général compatibles avec les élastomères insaturés couramment utilisés dans l'industrie du pneumatique.

3) La matière peut être réalisée avec des élastomères de coût nettement inférieur à celui des élastomères silicones.

Les valeurs préférentielles précédemment citées en ce qui concerne notamment la viscosité, l'extrait sec, le poids moléculaire arithmétique de la fraction élastomère, permettent d'obtenir le meilleur compromis entre la facilité d'application de la matière 8 et le bon fonctionnement de la membrane 9 dans l'enceinte.

La demanderesse a ensuite effectué des essais en utilisant pour la matière 8 des formulations non conforme à l'invention pour au moins une des raisons suivantes :

— viscosité inférieure à 0,3 Pa · s ou supérieure à 700 Pa · s ;

— extrait sec inférieur à 20 % ou supérieur à 80 % (pourcentage en poids par rapport au poids du mélange fluide initial) ;

— fraction élastomère dépourvue d'élastomère insaturé ou en comportant moins de 20 % en poids ;
— réticulation à chaud pendant un temps supérieur à 1 minute.

Dans tous les cas les résultats n'étaient pas satisfaisants pour au moins une des raisons suivantes :
— déformation ou rupture de la membrane 9 lors de la réticulation du ou des élastomères de la matière 8 ;
— mauvais collage du joint 9 sur les corps 2, 3 ou collage par points seulement ;
— rupture de la membrane 9 dans l'enceinte ;
— pénétration du fluide gazeux de l'enceinte à l'intérieur de l'éprouvette ;
— perméabilité insuffisante de la membrane 9 lors de la phase d'échauffement de l'éprouvette dans l'enceinte d'où présence d'air dans l'éprouvette 1 cuite à la sortie de l'enceinte. La figure 3 représente par exemple une telle éprouvette défectueuse.

A titre d'exemple, le tableau 2 suivant donne, pour la matière 8, deux formulation $F_{10}$ et $F_{11}$ qui ne sont pas conformes à l'invention, ces formulations provoquant les inconvénients suivants :
— la formulation $F_{10}$ conduit à une rupture du joint 9 lors de sa formation par réticulation ;
— la formulation $F_{11}$ donne un joint 9 qui n'est pas assez résistant, et pas assez perméable pour permettre l'évacuation de l'air lors de la phase d'échauffement.

Tableau 2

| Formulations | | $F_{10}$ | $F_{11}$ |
|---|---|---|---|
| Nature de l'élastomère | | NR | IR |
| Poids moléculaire moyen de l'élastomère (égal au $P_{ma}$) | | 600 000 | 300 000 |
| composition de l'extrait sec (parties en poids) | Elastomère | 100 | 100 |
| | oxyde de zinc (Zn O) | 3 | |
| | acide stéarique | 1 | |
| | cyclohexylbenzothiazyl sulfénamide | 2 | |
| | soufre | 3 | |
| | HAF-HS (noir de carbone qualité N 339) | | 30 |
| | HAF (noir de carbone qualité N 330) | 50 | |
| Nature du solvant | | 100/160 | 100/160 |
| % d'extrait sec | | 30 % | 30 % |
| viscosité mesurée au Brookfield (Pa.s) | | 30 | 25 |
| Perméabilité du joint obtenu après réticulation (Norme ISO 2782) $m^3.m/s.m^2.Pa$ | | $1,6.10^{-16}$ | $3.10^{-18}$ |

Remarques sur le tableau 2

1. La fraction élastomère des formulations $F_{10}$, $F_{11}$ est entièrement constituée d'un seul élastomère.
2. La réticulation du caoutchouc naturel (formulation $F_{10}$) est effectuée à 150 °C pendant 30 minutes.
3. Le solvant 100/160 a la même définition que celle donnée plus haut dans les remarques concernant le tableau 1, de même que les abréviations NR, IR.

La figure 4 représente un autre exemple de réalisation de l'invention, cet exemple étant appliqué à la technique de rechapage. Cette figure montre la partie supérieure d'une enveloppe de pneumatique 40. Cette enveloppe comporte une carcasse 41 en caoutchouc reticulé armé par des câbles 42 continus d'un bourrelet à l'autre. Dans un but de simplification les bourrelets de l'enveloppe 40 ne sont pas représentés sur le dessin. L'enveloppe 40 comporte une armature de renforcement 43 disposée sur le sommet de la carcasse 41. Au-dessus de la carcasse 41 et du renfort 43 est appliquée une couche de gomme de liaison 44 réticulable appliquée sous forme d'un solide déformable ou d'une solution. Au-dessus de la couche de liaison 44 sont appliqués plusieurs enroulements d'une feuille de caoutchouc réticulable 45, ces enroulements étant destinés à former la bande de roulement 46 après réticulation.

On applique ensuite la matière 8 de telle sorte qu'elle recouvre les faces latérales 440 de la couche 44, une partie des faces latérales 410 de la carcasse 41 et les faces latérales 450 des enroulements 45. De chaque côté de l'enveloppe 40, la matière 8 recouvre donc l'extérieur de l'interface 441, entre la couche 44 et la carcasse 41, et l'extérieur de l'interface 445 entre la couche 44 et les enroulements 45. La matière 8, qui est à cheval sur la carcasse 41, sur la couche 44 et sur les enroulements 45, s'étend par exemple au-dessous de la couche 44 et sur le dessus de l'enroulement 45, la largeur de ces deux zones extrêmes où s'étend la matière étant d'environ 20 mm, cette largeur étant mesurée dans le plan radial de la figure 4. La formulation de la matière 8 correspond par exemple à l'une quelconque des formulations $F_1$ à $F_7$ et les formulations des caoutchoucs utilisés pour la carcasse 41, la couche 44 et les enroulements 45 correspondent par exemple aux définitions données précédemment pour les corps 2, 3 mais sans utiliser des élastomères insaturés de type butyle ou EPT, ou des élastomères saturés. La quantité de matière 8 est telle que l'épaisseur du joint 9, après réticulation de la matière 8, soit au moins égale à 0,1 mm et au plus égale à 1 mm sur les portions du joint qui recouvrent les interfaces 441, 445.

La réticulation du ou des élastomères insaturés contenus dans la matière 8, et la cuisson ultérieure de l'enveloppe 40 s'effectuent comme décrit précédemment pour l'éprouvette 1, cette cuisson ayant pour but de réticuler la feuille 45 et la couche 44.

Lorsque l'on a sorti l'enveloppe 40 de l'enceinte, la pellicule 9 formant joint était apparemment dans le même état qu'avant l'introduction de l'enveloppe dans l'enceinte. Un examen minutieux de l'enveloppe 40 cuite et sortie de l'enceinte, n'a révélé la présence d'aucune poche d'air aux interfaces 441, 445, de part et d'autre de la couche de liaison 44.

Des essais d'arrachage de la bande de roulement 46 n'ont révélé aucun défaut de collage des enroulements de la feuille 45 entre eux et de cette feuille 45 sur la couche 44, de même qu'aucun défaut de collage entre la couche 44 et la carcasse 41.

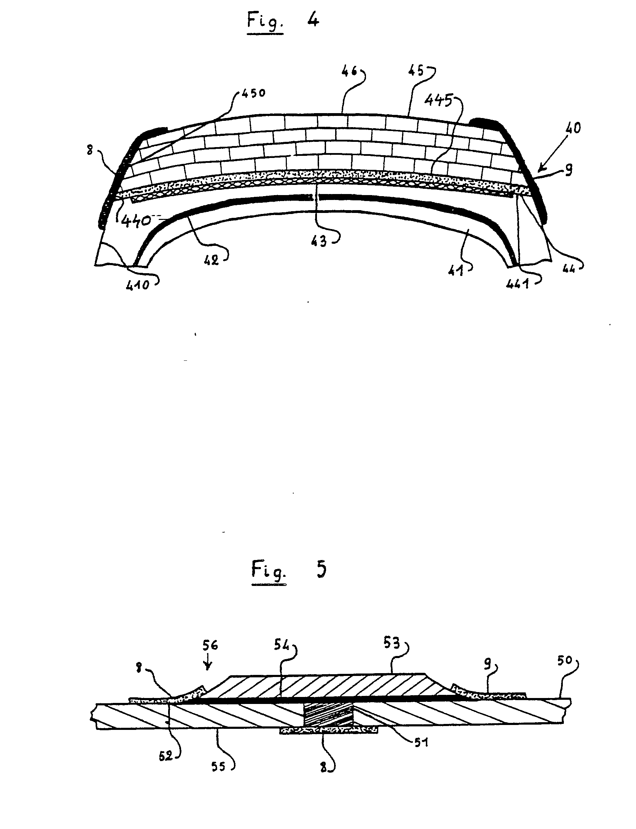

La figure 5 représente un autre exemple de réalisation de l'invention. Cette figure représente un article 50 en caoutchouc, par exemple un flanc d'enveloppe de pneumatique, dans lequel une blessure 51 a été réparée de façon connue en soi. Sur la face supérieure 52 de l'article 50 on a appliqué un emplâtre de réparation 53 étanche aux fluides et comportant une couche de liaison 54 réticulable si cet emplâtre 53 est déjà réticulé. Après avoir disposé l'emplâtre 53 sur la face 52 on applique une couche de matière 8 sur les bords biseautés de l'emplâtre 53 et de la couche de liaison 54 et sur les parties adjacentes de la face 52.

On applique également une couche de matière 8 sur la face 55 de l'article 50 opposée à la face 52, c'est-à-dire sur la face inférieure de cet article, contre la blessure réparée 51. La formulation de la matière 8 correspond par exemple à l'une quelconque des formulations $F_1$ à $F_7$ précédemment décrites et les formulations des caoutchoucs utilisés pour l'article 50, la réparation 51, l'emplâtre 53 et la couche 54 correspondent par exemple aux définitions données précédemment pour les corps 2, 3 mais sans utiliser des élastomères insaturés de type butyle ou EPT, ou des élastomères saturés. La quantité de matière 8 est telle que l'épaisseur du joint 9 après réticulation de la matière 8 soit conforme à l'invention.

La réticulation de l'élastomère insaturé ou des élastomères insaturés contenus dans la matière 8 et la cuisson ultérieure de l'ensemble 56, constitué par l'article 50, la blessure réparée 51, l'emplâtre 53, la couche 54, les joints 9, s'effectuent comme décrit précédemment pour l'éprouvette 1, cette cuisson ayant pour but de réticuler les matières non encore réticulées de cet ensemble.

A la sortie de l'enceinte après cuisson, on constate que l'emplâtre 53 et la réparation 51 adhèrent parfaitement à l'article 50 même si de l'air était resté emprisonné dans l'ensemble 56 avant cuisson.

Pour la clarté du dessin, l'épaisseur du joint 9 a été exagérée sur les figures 1 à 5.

Dans tous les exemples précédents les corps à réunir étaient en caoutchouc.

Il va de soi de l'invention s'applique aux cas où au moins un des corps à réunir est en matière déformable dépourvue de caoutchouc par exemple un polymère thermoplastique.

L'invention couvre aussi les cas où la matière formant joint conforme à l'invention est appliquée sur une partie seulement de l'extérieur de l'interface ou des interfaces, le reste de l'extérieur de l'interface ou des interfaces étant recouvert avec un joint imperméable pendant la phase d'échauffement. Dans ce cas il est préférable d'utiliser des moyens permettant de drainer l'air inclus entre les corps vers le joint conforme à l'invention, ces moyens étant par exemple des fils, des fibres, des câbles, des matières tissées ou non tissées.

Bien entendu, l'invention n'est pas limitée aux exemples de réalisation ci-dessus décrits.

## Revendications

1. Procédé pour réaliser un ensemble (1, 40, 56) comportant au moins deux corps (2, 3, 41, 44, 46, 50, 53, 54), dont au moins un est déformable, consistant à disposer une face d'un des corps contre une face de l'autre corps, puis à appliquer une matière (8) destinée à former un joint entre les deux corps sur tout ou partie de l'extérieur de leur interface ainsi obtenue, l'ensemble ainsi réalisé étant destiné à être cuit ensuite, après formation du joint, dans une enceinte chauffée contenant un fluide sous pression de telle sorte que, lors de cette cuisson, l'ensemble soit directement au contact du fluide et les corps adhèrent l'un à l'autre, caractérisé par les points suivants :

a) les faces sont disposées l'une contre l'autre de telle sorte qu'il existe des contacts imparfaits entre elles susceptibles de favoriser les cheminements gazeux vers l'extérieur de l'ensemble ;

b) la matière (8) est constituée d'un mélange fluide dont la viscosité mesurée à température normale est au moins égale à 0,3 Pa · s et au plus égale à 700 Pa · s ;

c) l'extrait sec du mélange, mesuré à température et pression normales, est au moins égal à 20 % en poids et au plus égal à 80 % en poids, par rapport au poids du mélange fluide initial ;

d) l'extrait sec du mélange comporte une fraction élastomère dont au moins 20 % en poids est constitué d'au moins un élastomère insaturé susceptible de réticuler soit à température ambiante, soit à chaud pendant un temps inférieur à une minute ;

e) la quantité de matière (8) appliquée est choisie de telle sorte que le joint obtenu après réticulation de l'élastomère insaturé ou des élastomères insaturés ait une épaisseur au moins égale à 0,1 mm et au plus égale à 1 mm dans sa portion recouvrant l'interface ;

f) on cuit l'ensemble, après formation du joint par réticulation, dans une enceinte chauffée contenant un fluide sous pression, l'ensemble étant directement au contact du fluide, de sorte que l'air inclus entre les faces des corps diffuse de l'intérieur de l'ensemble vers l'extérieur de cet ensemble en migrant à travers le joint et que les corps adhèrent l'un à l'autre.

2. Procédé selon la revendication 1 caractérisé en ce que la viscosité du mélange fluide est au moins égale à 10 Pa · s et au plus égale à 50 Pa · s.

3. Procédé selon l'une quelconque des revendications 1 ou 2 caractérisé en ce que l'extrait sec est au moins égal à 30 % en poids et au plus égal à 70 % en poids, par rapport au poids du mélange fluide initial.

4. Procédé selon l'une quelconque des revendications 1 à 3 caractérisé en ce que l'élastomère insaturé est un des élastomères suivants : un caoutchouc naturel, un polyisoprène, un polybutadiène, un polychloroprène, un copolymère styrène-butadiène, un copolymère isobutylène-isoprène, un copolymère isobutylène-isoprène halogéné, un terpolymère à base d'éthylène et de propylène (EPT).

5. Procédé selon l'une quelconque des revendications 1 à 3 caractérisé en ce que l'élastomère insaturé est un des élastomères suivants : un caoutchouc naturel, un polyisoprène, un polybutadiène, un polychloroprène, un copolymère styrène-butadiène.

6. Procédé selon l'une quelconque des revendications 1 à 5 caractérisé en ce que la fraction élastomère comporte au moins 60 % en poids d'élastomère(s) insaturé(s).

7. Procédé selon la revendication 6 caractérisé en ce que la fraction élastomère comporte au moins 80 % en poids d'élastomère(s) insaturé(s).

8. Procédé selon l'une quelconque des revendications 1 à 7 caractérisé en ce que l'extrait sec comporte au moins 40 % en poids de fraction élastomère.

9. Procédé selon la revendication 8 caractérisé en ce que l'extrait sec comporte au moins 60 % en poids de fraction élastomère.

10. Procédé selon l'une quelconque des revendications 1 à 9 caractérisé en ce que le poids moléculaire arithmétique $P_{ma}$ est au moins égal à 6 000 et au plus égal à 600 000.

11. Procédé selon l'une quelconque des revendications 1 à 10 caractérisé en ce que l'extrait sec comporte au moins 5 p.c.e. (parties en poids pour 100 parties en poids de la fraction élastomère) et au plus 30 p.c.e. d'une quinone ou d'un ensemble de quinones.

12. Procédé selon l'une quelconque des revendications 1 à 10 caractérisé en ce que l'extrait sec comporte au moins 3 p.c.e. et au plus 9 p.c.e. de soufre.

13. Procédé selon la revendication 12 caractérisé en ce que l'extrait sec comporte au moins 1 p.c.e. et au plus 4 p.c.e. d'un xanthate ou d'un ensemble de xanthates.

14. Procédé selon l'une quelconque des revendications 12 ou 13 caractérisé en ce que l'extrait sec comporte au moins 0,2 p.c.e. et au plus 1 p.c.e. d'une amine ou d'un ensemble d'amines.

15. Procédé selon l'une quelconque des revendications 12 à 14 caractérisé en ce que l'extrait sec comporte au moins 2 p.c.e. et au plus 4 p.c.e. d'un carbamate ou d'un ensemble de carbamates.

16. Procédé selon l'une quelconque des revendications 1 à 15 caractérisé en ce que l'extrait sec comporte au moins un oxyde choisi parmi les oxydes de zinc ($ZnO$), de plomb ($PbO_2$), de magnésium ($MgO$), la proportion de l'oxyde ou de l'ensemble des oxydes étant au moins égale à 2 p.c.e. et au plus égale à 10 p.c.e.

17. Procédé selon l'une quelconque des revendications 1 à 16 caractérisé en ce que l'extrait sec comporte au moins 0,5 p.c.e. et au plus 3 p.c.e. d'acide stéarique.

18. Procédé selon l'une quelconque des revendications 1 à 17, caractérisé en ce que l'extrait sec comporte au moins 10 p.c.e. et au plus 50 p.c.e. de silice.

19. Procédé selon l'une quelconque des revendications 1 à 18 caractérisé en ce que l'extrait sec comporte au moins 10 p.c.e. et au plus 50 p.c.e. de noir de carbone.

20. Procédé selon l'une quelconque des revendications 1 à 19 caractérisé en ce que l'extrait sec comporte au moins 5 p.c.e. et au plus 15 p.c.e. de résine organique.

21. Procédé selon l'une quelconque des revendications 1 à 20 caractérisé en ce qu'au moins un des corps est réalisé avec au moins un élastomère.

22. Procédé selon la revendication 21 caractérisé en ce qu'au moins un corps est réalisé avec au moins un élastomère insaturé réticulé préalablement à la formation du joint.

23. Procédé selon l'une quelconque des revendications 21 ou 22 caractérisé en ce qu'au moins un corps est réalisé avec au moins un élastomère insaturé réticulable lors de la cuisson.

24. Procédé selon l'une quelconque des revendications 1 à 23 caractérisé en ce qu'il consiste à fabriquer, réparer ou rechaper une enveloppe de pneumatique.

**Claims**

1. A method of producing an assembly (1, 40, 56) comprising at least two bodies (2, 3, 41, 44, 46, 50, 53, 54), at least one of the bodies being deformable, which consists in arranging one face of one of the bodies against one face of the other body and then applying a material (8) intended to form a joint between the two bodies over at least a part of the outside of their interface which is thus obtained, the assembly thus produced being intended thereupon to be cured after formation of the joint within a heated enclosure containing a fluid under pressure in such a manner that upon this curing the assembly is directly in contact with the fluid an the bodies adhere to each other, characterized by the following features ;

a) the faces are arranged against each other in such a manner that there are imperfect contacts between them which are capable of favoring the channeling of gases towards the outside of the assembly ;

b) the material (8) is formed of a fluid mixture having a viscosity measured at normal temperature at least equal to 0.3 Pa · s and at most equal to 700 Pa · s ;

c) the dry extract of the mixture, measured at normal temperature and pressure, is at least equal to 20 % by weight and at most equal to 80 % by weight, based on the weight of the initial fluid mixture ;

d) the dry extract of the mixture comprises an elastomer fraction at least 20 % by weight of which elastomer fraction is formed of at least one unsaturated elastomer capable of cross-linking either at ambient temperature or by heating for a period of time of less than one minute ;

e) the quantity of material (8) applied is selected in such a manner that the joint obtained after cross-linking of the at least one unsaturated elastomer has a thickness at least equal to 0.1 mm and at most equal to 1 mm in the portion thereof covering the interface ;

f) the assembly is cured, after formation of the joint by cross-linking, within a heated enclosure containing a fluid under pressure, the assembly being directly in contact with the fluid so that air enclosed between the faces of the bodies diffuses from the inside of the assembly towards the outside of said assembly, migrating through the joint, and so that the bodies adhere to each other.

2. A method according to claim 1, characterized by the fact that the viscosity of the fluid mixture is at least equal to 10 Pa · s and at most equal to 50 Pa · s.

3. A method according to any one of claim 1 or claim 2, characterized by the fact that the dry extract is at least equal to 30 % by weight and at most equal to 70 % by weight, based on the weight of the initial fluid mixture.

4. A method according to any one of claims 1 to 3, characterized by the fact that the unsaturated elastomer is one of the following elastomers : a natural rubber, a polyisoprene, a polybutadiene, a polychloroprene, a styrene-butadiene copolymer, and isobutylene-isoprene copolymer, a halogenated isobutylene-isoprene copolymer, and a terpolymer having a base of ethylene and propylene (EPT).

5. A method according to any one of claims 1 to 3, characterized by the fact that the unsaturated elastomer is one of the following elastomers : a natural rubber, a polyisoprene, a polybutadiene, a polychloroprene and a styrene-butadiene copolymer.

6. A method according to any one of claims 1 to 5, characterized by the fact that the elastomer fraction is formed of at least 60 % by weight of at least one unsaturated elastomer.

7. A method according to claim 6, characterized by the fact that the elastomer fraction is formed of at least 80 % by weight of at least one unsaturated elastomer.

8. A method according to any one of claims 1 to 7, characterized by the fact that the dry extract comprises at least 40 % by weight of elastomer fraction.

9. A method according to claim 8, characterized by the fact that the dry extract comprises at least 60 % by weight of elastomer fraction.

10. A method according to any one of claims 1 to 9, characterized by the fact that the arithmetic molecular weight $P_{ma}$ is at least equal to 6,000 and at most equal to 600,000.

11. A method according to any one of claims 1 to 10, characterized by the fact that the dry extract comprises at least 5 pphe (parts by weight per 100 parts by weight of the elastomer fraction) and at most 30 pphe of one quinone or of a whole of quinones.

12. A method according to any one of claims 1 to 10, characterized by the fact that the dry extract comprises at least 3 pphe and at most 9 pphe of sulfur.

13. A method according to claim 12, characterized by the fact that the dry extract comprises at least 1 pphe and at most 4 pphe of one xanthate or of a whole of xanthates.

14. A method according to any one of claim 12 or claim 13, characterized by the fact that the dry extract comprises at least 0.2 pphe and at most 1 pphe of one amine or of a whole of amines.

15. A method according to any one of claims 12 to 14, characterized by the fact that the dry extract comprises at least 2 pphe and at most 4 pphe of one carbamate or of a whole of carbamates.

16. A method according to any one of claims 1 to 15, characterized by the fact that the dry extract comprises at least one oxide selected from among zinc oxide (Zno), lead oxide ($PbO_2$), and magnesium oxide (MgO), the proportion of the oxide or of the total oxides being at least equal to 2 pphe and at most equal to 10 pphe.

17. A method according to any one of claims 1 to 16, characterized by the fact that the dry extract comprises at least 0.5 pphe and at most 3 pphe of stearic acid.

18. A method according to any one of claims 1 to 17, characterized by the fact that the dry extract comprises at least 10 pphe and at most 50 pphe of silica.

19. A method according to any one of claims 1 to 18, characterized by the fact that the dry extract comprises at least 10 pphe and at most 50 pphe of carbon black.

20. A method according to any one of claims 1 to 19, characterized by the fact that the dry extract comprises at least 5 pphe and at most 15 pphe of organic resin.

21. A method according to any one of claims 1 to 20, characterized by the fact that at least one of the bodies is made with at least one elastomer.

22. A method according to claim 21, characterized by the fact that at least one of the bodies is made with at least one unsaturated elastomer which has been cross-linked prior to the formation of the joint.

23. A method according to any one of claim 21 or claim 22, characterized by the fact that at least one of the bodies is made with at least one unsaturated elastomer which is cross-linkable upon curing.

24. A method according to any one of claims 1 to 23, characterized by the fact that it consists of manufacturing, repairing, recapping or retreading a tire.

## Patentansprüche

1. Verfahren zur Herstellung eines Verbandes (1, 40, 56), der aus mindestens zwei Körpern (2, 3, 41, 44, 46, 50, 53, 54) besteht, wobei mindestens ein Körper deformierbar ist, bestehend aus dem flächigen Aneinanderlegen des einen Körpers und des anderen Körpers und des Aufbringens eines Materials (8), das dazu dient, eine Verbindung zwischen den beiden Körpern über die gesamte oder einen Teil des Außenrandes ihrer Zwischenfläche zu bilden, wobei die so erhaltene Kombination nach Bildung der Verbindung in einem geheizten Gefäß, welches ein unter Druck stehendes Fluid enthält, so erhitzt wird, daß während des Erhitzens der Verband direkt in Kontakt mit dem Fluid ist und die Körper miteinander verbunden werden, gekennzeichnet durch die folgenden Punkte :

a) die Flächen sind einander so zugewandt, daß der Kontakt zwischen ihnen unvollständig ist und die Wanderung von Gas aus dem Verband heraus begünstigt wird ;

b) das Material (8) besteht aus einer Fluidmischung, deren Viskosität, gemessen bei normalen Temperaturen, mindestens 0,3 Pa · s und höchstens 700 Pa · s ist ;

c) der Trockenextrakt der Mischung, gemessen bei normalen Druck und normaler Temperatur, beträgt mindestens 20 Gew.-% und höchstens 80 Gew.-%, bezogen auf das Gewicht der ursprünglichen Fluidmischung ;

d) der Trockenextrakt der Mischung enthält eine Elastomerenfraktion, die zumindest zu 20 Gew.-% aus mindestens einem ungesättigten Elastomeren besteht, welches bei Umgebungstemperatur oder in der Hitze in einer Zeit, die kleiner als eine Minute ist, vernetzt bar ist ;

e) die Menge des verwendeten Materials (8) wird so gewählt, daß die erhaltene Verbindung nach der Vernetzung des ungesättigten Elastomeren oder der ungesättigten Elastomeren eine Dicke von zumindest 0,1 mm und höchstens 1 mm im Teil, der die Zwischenfläche abdeckt, aufweist ;

f) man erhitzt den Verband nach Bildung der Verbindung durch Vernetzung in einem erwärmten Gefäß, welches ein Fluid unter Druck enthält, wobei der Verband direkt in Kontakt mit dem Fluid steht, so, daß die zwischen den Flächen der Körper eingeschlossene Luft vom Inneren des Verbandes nach außen durch die Verbindung wandert und daß die beiden Körper aneinander kleben.

2. Verfahren nach Anspruch 1, dadurch gekennzeichnet, daß die Viskosität der Fluidmischung zwischen 10 Pa · s und 50 Pa · s liegt.

3. Verfahren nach einem der Ansprüche 1 oder 2, dadurch gekennzeichnet, daß der Trocken extrakt zwischen 30 und 70 Gew.-%, bezogen auf das Gewicht der Ausgangsfluidmischung, beträgt.

4. Verfahren nach einem der Ansprüche 1 bis 3, dadurch gekennzeichnet, daß das ungesättigte Elastomere eines der folgenden Elastomere ist : ein Naturkautschuk, ein Polyisopren, ein Polybutadien, ein Polychloropren, ein copolymeres Styrenbutadien, ein copolymeres Isobutylen-Isopren, ein copolymeres Isobutylen-halogeniertes Isopren, ein Terpolymer auf der Basis des Äthylens und Propylens (EPT).

5. Verfahren nach einem der Ansprüche 1 bis 3, dadurch gekennzeichnet, daß das ungesättigte Elastomere eines der folgenden Elastomere ist : ein Naturkautschuk, ein Polyisopren, ein Polybutadien, ein Polychloropren, ein copolymer Styrenbutadien.

6. Verfahren nach einem der Ansprüche 1 bis 5, dadurch gekennzeichnet, daß die Elastomerenfraktion zumindest 60 Gew.-% zumindest eines ungesättigten Elastomers enthält.

7. Verfahren nach Ansprüch 6, dadurch gekennzeichnet, daß die Elastomerenfraktion zumindest 80 Gew.-% zumindest eines ungesättigte n Elastomers enthält.

8. Verfahren nach einem der Ansprüche 1 bis 7, dadurch gekennzeichnet, daß der Trockenextrakt zumindest 40 Gew.-% der Elastomerenfraktion beträgt.

9. Verfahren nach Anspruch 8, dadurch gekennzeichnet, daß der Trockenextrakt zumindest 60 Gew.-% der Elastomerenfraktion beträgt.

10. Verfahren nach einem der Ansprüche 1 bis 9, dadurch gekennzeichnet, daß das arithmetische Molekulargewicht $P_{ma}$ zumindest 6 000 und höchstens 600 000 beträgt.

11. Verfahren nach einem der Ansprüche 1 bis 10, dadurch gekennzeichnet, daß der Trockenextrakt zumindest 5 p. c. e. (Gewichtsteile auf 100 Gewichtsteile der Elastomerenfraktion) und höchstens 30 p. c. .e. eines Chinons oder aller vorhandenen Chinons enthält.

12. Verfahren nach einem der Ansprüche 1 bis 10, dadurch gekennzeichnet, daß der Trockenextrakt zumindest 3 p. c. e. und höchstens 9 p. c. e. Schwefel enthält.

13. Verfahren nach Anspruch 12, dadurch gekennzeichnet, daß der Trockenextrakt zumindest 1 p. c. e. und höchstens 4 p. c. e. eines Xanthats oder aller vorhandenen Xanthaten aufweist.

14. Verfahren nach einem der Ansprüche 12 oder 13, dadurch gekennzeichnet, daß der Trockenextrakt zumindest 0,2 p. c. e. und höchstens 1 p. c. e. eines Amines oder aller vorhandenen Aminen aufweist.

15. Verfahren nach einem der Ansprüche 12 bis 14, dadurch gekennzeichnet, daß der Trockenextrakt zumindest 2 p. c. e. und höchstens 4 p. c. e. eines Carbamats oder aller vorhandenen Carbamaten enthält.

16. Verfahren nach einem der Ansprüche 1 bis 15, dadurch gekennzeichnet, daß der Trockenextrakt zumindest 1 Oxid, ausgewählt vom Zinkoxid ($ZnO$), Bleioxid ($PbO_2$), Magnesiumoxid ($MgO$), enthält, wobei der Anteil des Oxids oder der Oxide zumindest 2 p. c. e. und höchstens 10 p. c. e. ist.

17. Verfahren nach einem der Ansprüche 1 bis 16, dadurch gekennzeichnet, daß der Trockenextrakt mindestens 0,5 p. c. e. und höchstens 3 p. c. e. Stearinsäure aufweist.

18. Verfahren nach einem der Ansprüche 1 bis 17, dadurch gekennzeichnet, daß der Trockenextrakt zumindest 10 p. c. e. und höchstens 50 p. c. e. Siliziumdioxid aufweist.

19. Verfahren nach einem der Ansprüche 1 bis 18, dadurch gekennzeichnet, daß der Trockenextrakt zumindest 10 p. c. e. und höchstens 50 p. c. e. Ruß aufweist.

20. Verfahren nach einem der Ansprüche 1 bis 19, dadurch gekennzeichnet, daß der Trockenextrakt zumindest 5 p. c. e. und höchstens 15 p. c. e. organischen Harzes aufweist.

21. Verfahren nach einem der Ansprüche 1 bis 20, dadurch gekennzeichnet, daß zumindest einer der Körper mindestens ein Elastomere aufweist.

22. Verfahren nach Anspruch 21, dadurch gekennzeichnet, daß mindestens einer der Körper mindestens ein ungesättigtes, vor der Bildung der Verbindung vernetztes, Elastomere aufweist.

23. Verfahren nach einem der Ansprüche 21 oder 22, dadurch gekennzeichnet, daß zumindest einer der Körper mindestens ein ungesättigtes Elastomere aufweist, welches während der Erwärmung vernetzbar ist.

24. Verfahren nach einem der Ansprüche 1 bis 23, dadurch gekennzeichnet, daß es das Herstellen, Reparieren oder Runderneuern eines Luftreifens betrifft.

Fig. 1

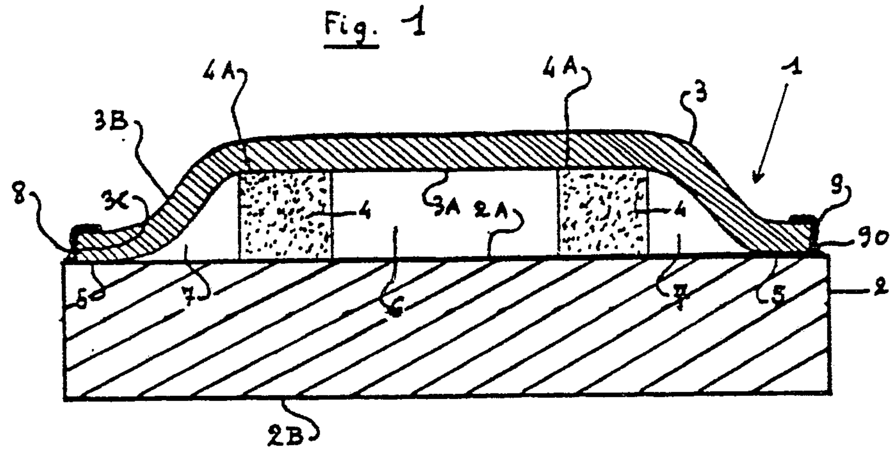


Fig. 2

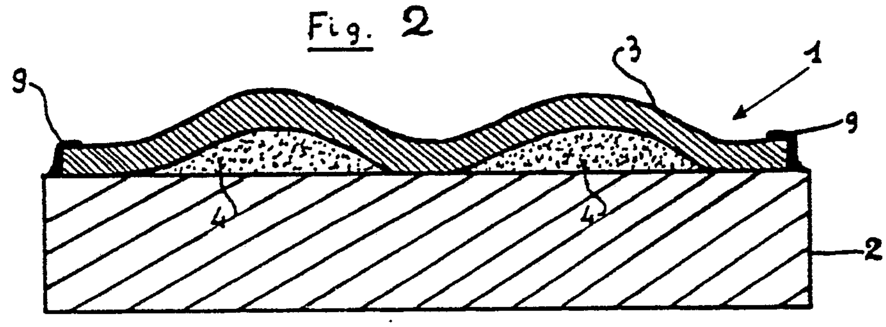


Fig. 3

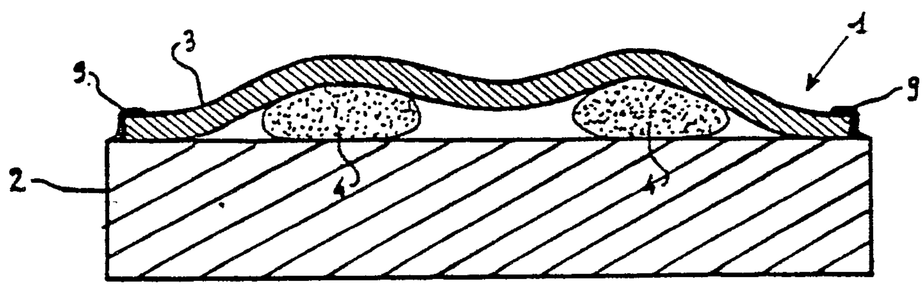

Fig. 4

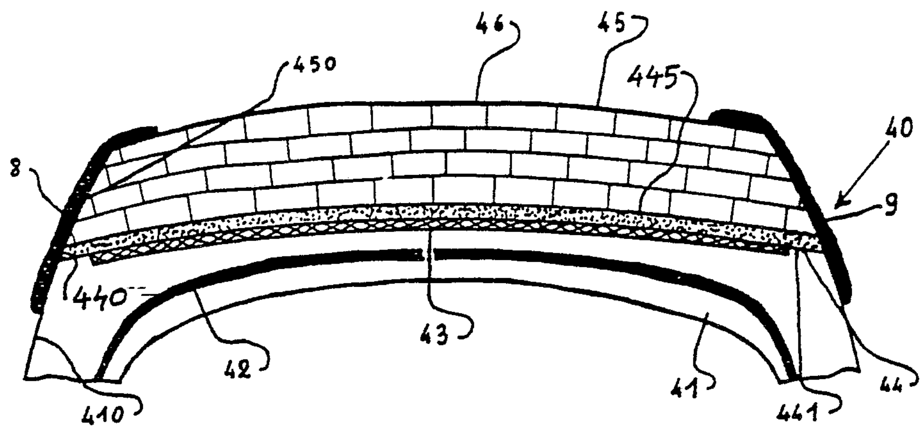


Fig. 5